# EUROPEAN PATENT APPLICATION

(11) **EP 4 645 903 A1**
(43) Date of publication of application: **05.11.2025**
(21) Application number: 23910035.7
(22) Date of filing: 07.12.2023
(51) Int. Cl.: H04R 9/06, H04R 9/02, G02C 11/00

(54) **LOUDSPEAKER MODULE, AUDIO SYSTEM, AND SMART GLASSES**

(30) Priority: 30.12.2022 CN 202211732750
(71) Applicant: Beijing Unicorn Technology Co., Ltd., Beijing 100098 (CN)
(72) Inventor: SHAN, Lianwen, Beijing 100098 (CN); LIAN, Weisheng, Beijing 100098 (CN)
(74) Representative: Grünecker Patent- und Rechtsanwälte PartG mbB
(86) International application number: PCT/CN2023/137218
(87) International publication number: WO 2024/140105

(57) **Abstract**

Embodiments of the present disclosure disclose a speaker module (2), an audio system (100) and smart glasses. Specific embodiments are as follows: the audio system (100) includes a carrier (1) and a speaker module (2), wherein the carrier (1) is provided with a hollow space and a first opening (1a) and a second opening (1b) in communication with the hollow space; the speaker module (2) includes a housing (21) with an opening (211b) and a speaker unit (22), and the speaker unit (22) is arranged inside the housing (21); the speaker module (2) is arranged in the hollow space of the carrier (1), the speaker unit (22) is exposed to the hollow space through the opening (211b), the first chamber (a) of the speaker unit (22) is defined inside the housing; the second chamber (b) of the speaker unit (22) is defined in a partial area of the hollow space; the housing (21) is provided with a first sound port (c); the first opening (1a) is arranged such that the first chamber (a) is in communication with the outside through the first sound port (c); and the second opening (1b) is arranged such that the second chamber (b) is in communication with the outside.

## Description

The present disclosure claims the priority of a Chinese patent application filed with China National Intellectual Property Administration on December 30, 2022, with an application number of CN202211732750.9 and entitled "Audio System and Smart Glasses", the contents of which are incorporated herein by reference in its entirety.

### TECHNICAL FIELD

The present disclosure relates to the technical field of electronic devices, in particular to a speaker module, an audio system and smart glasses.

### BACKGROUND

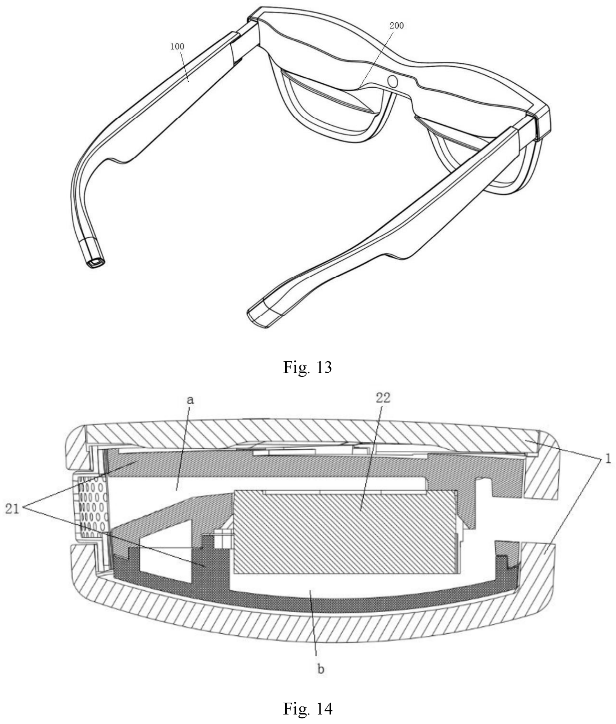

An audio system usually employs the acoustic dipole principle to solve the problem of sound leakage for a speaker inside a carrier. Referring to Fig. 14, a speaker module may usually be integrated in the carrier 1, and the speaker module is provided with a housing and a speaker unit arranged inside the housing; a front sound-guiding chamber a and a coupled rear chamber b of the speaker unit are defined inside the housing 21, and a sound outlet in communication with the front sound-guiding chamber a and an air leakage port in communication with the coupled rear chamber b are defined on the housing 21; a first sound port and a second sound port are defined on the carrier 1, such that the first sound port is in communication with the sound outlet, and the second sound port is in communication with the air leakage port. There are also audio systems that do not use a housing 21, instead, a speaker unit is directly integrated into the carrier 1, and an internal space defined by the inner wall of the carrier 1 is used as a front sound-guiding chamber a and a coupled rear chamber b for the speaker unit. A sound outlet in communication with the front sound-guiding chamber a and an air leakage port in communication with the coupled rear chamber b are defined on the housing of the carrier 1.

### SUMMARY

Embodiments of the present disclosure provide an audio system and smart glasses.

To achieve the above objectives, the present disclosure provides the following technical solutions:
in one aspect, the present disclosure provides a speaker module, including a housing and a speaker unit. The housing is provided with an opening, and the speaker unit is arranged inside the housing, wherein a first chamber of the speaker unit is defined inside the housing, the housing is provided with a first sound port, and the first chamber is in communication with the outside through the first sound port.

In another aspect, the present disclosure provides an audio system, including: a carrier and a speaker module. The carrier is provided with a hollow space and a first opening and a second opening in communication with the hollow space, and the speaker module includes a housing with an opening and a speaker unit, wherein the speaker unit is arranged in the housing, the speaker unit is arranged in the hollow space of the carrier, the speaker unit is exposed to the hollow space through the opening, a first chamber of the speaker unit is defined inside the housing, a second chamber of the speaker unit is defined in a partial area of the hollow space, the housing is provided with a first sound port, the first opening is configured such that the first chamber is in communication with the outside through the first sound port, and the second opening is cofigurd such that the second chamber is in communication with the outside.

In still another aspect, the present disclosure provides smart glasses, including: a frame and the above audio system, wherein the carrier of the audio system is connected to the frame, and the carrier is a temple. When the temple is worn on the head of a user, the distance between the sound outlet and the ear of the user is less than the distance between the air leakage port and the ear of the user.

The technical solution of the present disclosure is further described in detail below in conjunction with the accompanying drawings and embodiments.

### BRIEF DESCRIPTION OF THE DRAWINGS

The drawings constituting a part of the specification describe embodiments of the present disclosure, and together with the description, serve to explain the principles of the present disclosure.

With reference to the accompanying drawings, the present disclosure can be understood more clearly according to the following detailed description, in which:
Fig. 1 shows a first cross-sectional schematic diagram of an audio system provided in the embodiments of the present disclosure;
Fig. 2 shows a second cross-sectional schematic diagram of an audio system provided in the embodiments of the present disclosure;
Fig. 3 shows a third cross-sectional schematic diagram of an audio system provided in the embodiments of the present disclosure;
Fig. 4 shows a fourth cross-sectional schematic diagram of an audio system provided in the embodiments of the present disclosure;
Fig. 5 shows a fifth cross-sectional schematic diagram of an audio system provided in the embodiments of the present disclosure;
Fig. 6 shows a schematic diagram of an internal structure of a temple of smart glasses provided in the embodiments of the present disclosure;
Fig. 7 shows an exploded view of a temple of smart glasses provided in the embodiments of the present disclosure;
Fig. 8 shows a first perspective view of a housing of a speaker module of smart glasses provided in the embodiments of the present disclosure;
Fig. 9 shows a second perspective view of a housing of a speaker module of smart glasses provided in the embodiments of the present disclosure;
Fig. 10 shows a third perspective view of a housing of a speaker module of smart glasses provided in the embodiments of the present disclosure;
Fig. 11 shows a first perspective view of a temple of smart glasses provided in the embodiments of the present disclosure;
Fig. 12 shows a second perspective view of a temple of smart glasses provided in the embodiments of the present disclosure;
Fig. 13 shows a three-dimensional structural schematic diagram of smart glasses provided in the embodiments of the present disclosure;
Fig. 14 shows a structural schematic diagram of an audio system in the prior art.

In the figures: 100, audio system; 1. carrier; 1a. first opening; 1b. second opening; 11. first side structure; 12. second side structure; 121. internal protrusion; 2. speaker module; 21. housing; 211. first casing; 211a, extension portion; 211b, opening portion; 212. second casing; 22. speaker unit; 3. electrical connector; 4. mesh support member; 5. dustproof mesh; 200. frame; a. first chamber; b. second chamber; c. first sound port; d. second sound port; e. wiring channel; f. step.

It is to be noted that these drawings and text description are not intended to limit the scope of conception of the present disclosure in any way, but to explain the concepts of the present disclosure for those skilled in the art by referring to specific embodiments.

### DETAILED DESCRIPTION

To make the object, technical solution and advantages of embodiments of the present disclosure clearer, the technical solution in the embodiments will be described below clearly and completely with reference to the drawings in the embodiments of the present disclosure. The following embodiments are used for illustrating the present disclosure, but not limiting the scope of the present disclosure.

In the description of the present disclosure, it is to be noted that the orientation or positional relationship indicated by such terms as "upper", "lower", "inner" and "outer" is based on the orientation or positional relationship shown in the accompanying drawings. Such terms are merely intended to facilitate the description of the present disclosure and to simplify the description, and are not intended to indicate or imply that the device referred to must have a particular orientation, be constructed and operated in a particular orientation, and therefore are not to be construed as limitations of the present disclosure.

In the description of the present disclosure, it should be noted that, unless otherwise clearly specified and limited, the terms "mounting" and "connection" should be understood in a broad sense. For example, the connection can be a fixed connection, a detachable connection, or an integral connection; the connection can be mechanical connection or electrical connection; and the connection can be a direct connection or an indirect connection through an intermediate medium. For those skilled in the art, specific meanings of the above terms in the present disclosure can be understood according to specific circumstances.

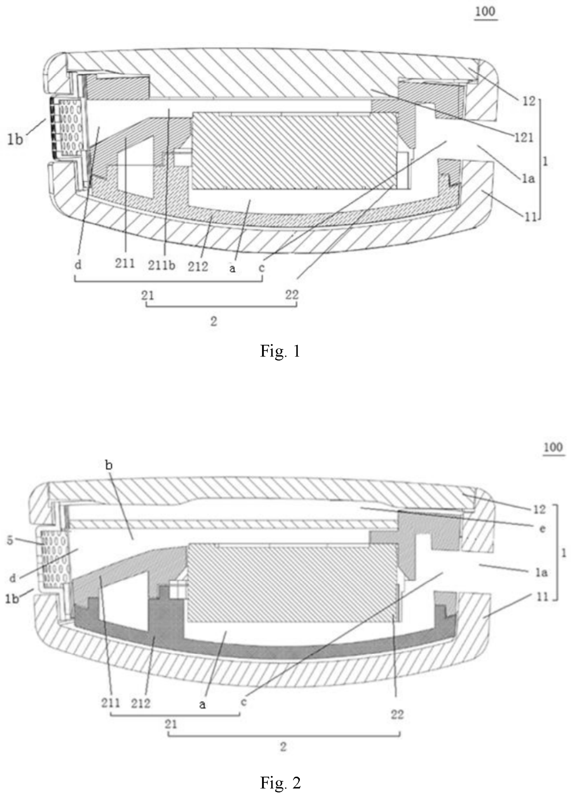

The present disclosure provides some embodiments of a speaker module 2. As shown in Figs. 1 to 7, a speaker module 2 includes a housing 21 and a speaker unit 22. The housing 21 is provided with an opening portion 211b, and the speaker unit 22 is arranged inside the housing 21 and comes out through the opening portion 211b (that is, the speaker unit 22 is exposed through the opening portion 211b). The first chamber a of the speaker unit 22 is defined inside the housing 21. The housing 21 is provided with a first sound port c, and the first chamber a is in communication with the outside through the first sound port c. In this way, only the housing 21 is used to define a chamber on one side of the speaker unit 22, thereby making it easy to mount the speaker module 2 in the carrier 1 with a limited height space, reducing the weight of the carrier 1, and saving material costs. In some optional embodiments, a sound-emitting side of the speaker unit 22 comes out through the opening portion 211b (i.e., the sound-emitting side of the speaker unit 22 is exposed through the opening portion 211b). Therefore, the first chamber a acts as a rear chamber of the speaker unit 22, and the first sound port c acts as an air leakage port of the speaker unit 22.

In some optional embodiments, a side opposite to the sound-emitting side of the speaker unit 22 comes out through the opening portion 211b (i.e., the side opposite to the sound-emitting side of the speaker unit 22 is exposed through the opening portion 211b). Therefore, the first chamber a acts as a front chamber of the speaker unit 22, and the first sound port c acts as a sound outlet of the speaker unit 22.

In some optional embodiments, a step f configured to fix the speaker unit 22 is arranged inside the housing 21.

In some optional embodiments, the speaker unit 22 further includes an electrical connector 3, and the electrical connector 3 is connected to the speaker unit 22 through the opening portion 211b, thereby realizing electrical connection for the speaker unit 22.

Figs. 1 to 5 show some embodiments of an audio system 100 provided in the present disclosure. The audio system 100 includes a carrier 1 and a speaker module 2. The carrier 1 is provided with a hollow space, and a first opening 1a and a second opening 1b in communication with the hollow space. The speaker module 2 is arranged in the hollow space of the carrier 1. Optionally, the speaker module 2 can be detachably fixed in the hollow space of the carrier 1. The speaker module 2 includes a housing 21 provided with an opening portion 211b and a speaker unit 22, and the speaker unit 22 is arranged inside the housing 21. Generally speaking, the speaker unit includes a diaphragm that vibrates back and forth, thereby urging the surrounding air to vibrate, and producing sound. Optionally, the speaker unit 22 may be a moving coil speaker, a MEMS speaker, or the like. Among them, the speaker unit 22 is exposed to the hollow space through the opening portion 211b, the first chamber a of the speaker unit 22 is defined inside the housing 21, and the second chamber b of the speaker unit 22 is defined in a partial area of the hollow space, wherein the housing 21 is provided with a first sound port c, the first opening 1a is configured such that the first chamber a is in communication with the outside through the first sound port c, and the second opening 1b is configured such that the second chamber b is in communication with the outside.

In the audio system 100 provided in the embodiment of the present disclosure, the speaker module provided with the housing 21 is arranged in the hollow space of the carrier 1, thereby being conducive to replacing the speaker module 2 inside the carrier 1. At the same time, the first chamber a is defined inside the housing 21, and the housing 21 is provided with an opening portion 211b, such that the second chamber b of the speaker is defined in a partial area of the hollow space in the carrier 1, thereby saving the internal height space of the carrier 1 to a certain extent, being conducive to processing the carrier 1 to be thinner and reducing the weight of the carrier 1, and saving material costs.

In an optional embodiment, the first chamber and the second chamber may radiate sound waves to the outside in a manner equivalent to an acoustic dipole. Specifically, the first chamber and the second chamber radiate the first sound wave and the second sound wave to the outside through the first opening 1a and the second opening 2a respectively, such that in a near field close to the first opening 1a or close to the second opening 2a, the first sound wave or the second sound wave can be heard by human ears. The second sound wave is out of phase with the first sound wave (for example, by 180 degrees), such that the energy of the first sound wave and the energy of the second sound wave can cancel out in a far field, thereby reducing sound leakage from the audio system, and protecting the privacy.

In an optional embodiment, the carrier 1 may be a temple case of smart glasses, or a case of an earphone, a case of a mobile phone, or cases of other electronic devices with sound-producing functions. Taking the carrier 1 being the temple case of smart glasses as an example, a speaker module is arranged in the temple case. When the smart glasses are worn on the head of a user, a temple rests on the ear of the user, such that one of the first opening 1a and the second opening 1b is close to the ear hole of the user, and the other is away from the ear hole of the user. One of the first sound wave and the second sound wave is heard by the user, and the other is radiated to the outside. The second sound wave and the first sound wave are superimposed at a position far away from the ear of the user. Since the first sound wave is out of phase with the second sound wave, they will cancel out after superposition, thereby making it impossible for people around the user of the smart glasses to hear the sound emitted by the smart glasses, and protecting the privacy of the user.

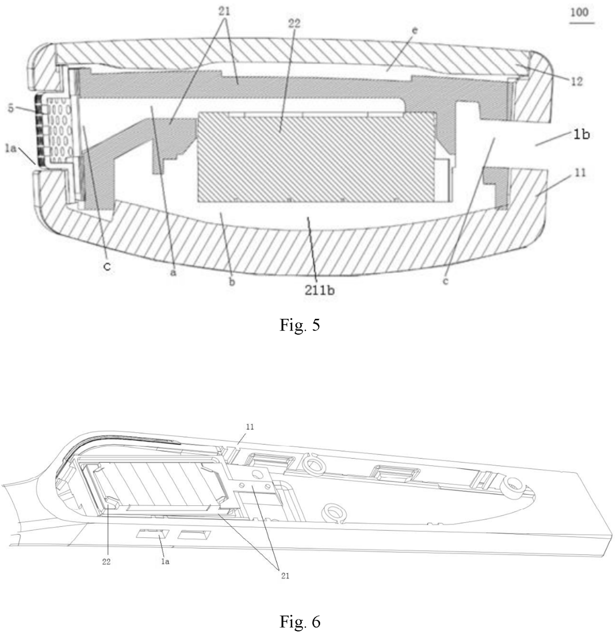

In the embodiments of the present disclosure, different arrangements of the speaker unit 22 are provided. Fig. 5 shows an arrangement of the speaker unit 22 in some embodiments of the present disclosure. The sound-emitting side of the speaker unit 22 is concealed inside the housing 21, the first chamber a is a front chamber of the speaker, the first opening 1a is the sound outlet of the front chamber of the speaker, the second chamber b is a rear chamber of the speaker, and the second opening 1b is an air leakage port in communication the rear chamber of the speaker. The first sound wave emitted from the front chamber of the speaker enters the human ears through the sound outlet and is heard by the user, and the second sound wave emitted from the rear chamber of the speaker is radiated to the outside through the air leakage port, and cancels out with the first sound wave in the outside. Figs. 1 to 4 illustrate another arrangement of the speaker unit 22 in some embodiments of the present disclosure. The sound-emitting side of the speaker unit 22 is exposed to the hollow space through the opening portion 211b, the first chamber a is a rear chamber of the speaker, the first opening 1a is an air leakage port of the rear chamber of the speaker, the second chamber b is a front chamber of the speaker, and the second opening 1b is a sound outlet of the front chamber of the speaker. In the embodiments of the present disclosure, different arrangements of the speaker unit 22 must ensure an insulation degree of the front chamber and the rear chamber of the speaker. For example, the speaker unit 22 can be fixed by applying glue. In addition to fixing the speaker unit 22, the glue can also be used to seal and insulate the front chamber of the speaker from the rear chamber of the speaker to ensure the acoustic performance of the audio system 100.

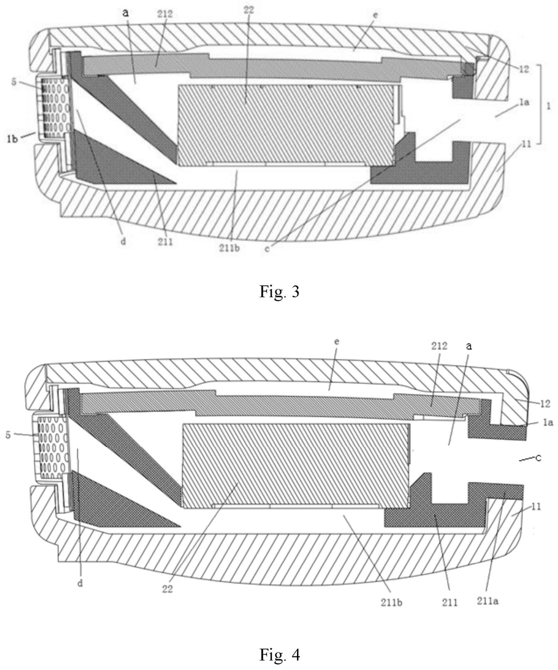

In an optional embodiment, the carrier 1 may include a first side structure 11 and a second side structure 12, and the first side structure 11 and the second side structure 12 are mutually buckled to define a hollow space inside the first side structure 11 and the second side structure 12. When the carrier 1 is a temple, then the first side structure 11 may be an outer case of the temple and the second side structure 12 may be an inner case of the temple. Optionally, the sound-emitting side of the speaker unit 22 may face the inner case of the temple, as shown in Figs. 1 and 2. The sound-emitting side of the speaker unit 22 may also face the outer case of the temple, as shown in Figs. 3 and 4.

Some embodiments of the present disclosure provide different ways for communication between the second chamber b and the outside. In some embodiments, as shown in Fig. 1, the second sound port d is defined by the housing 21, and the second opening 1b of the carrier 1 is in communication with the second sound port d, such that the second chamber b is in communication with the outside through the second sound port d and the second opening 1b. In some embodiments, as shown in Fig. 2, the second sound port d is defined by the inner wall of the carrier 1 and the housing 21, and the second opening 1b is defined on the carrier 1 at a position corresponding to the second sound port, such that the second chamber b is in communication with the outside through the second sound port d and the second opening 1b, thereby being beneficial to simplifying the structure of the housing 21, further saving the hollow space of the carrier 1, reducing the weight of the carrier 1, and saving material costs.

Optionally, the cross-sectional area of the first sound port c is substantially equal to the cross-sectional area of the second sound port d. The volume of the first chamber a is substantially equal to the volume of the second chamber b, to significantly improve the isolation degree of the sound field and improve the acoustic performance of the audio system.

In some embodiments of the present disclosure, as shown in Figs. 1, 3, and 4, the first chamber a, the first sound port c, the second sound port d and the opening portion 211b are defined by the housing 21, the opening portion 211b of the housing 21 is in communication with the second sound port d, and the opening portion 211b is closed by an inner wall of the carrier 1 to define the second chamber b. Optionally, the inner wall of the carrier 1 can be a flat wall, and the inner wall of the carrier 1 can directly cover the opening portion 211b, as shown in Figs. 3 and 4. The internal space of the opening portion 211b is not occupied by the carrier 1. Alternatively, the inner wall of the carrier 1 may also be provided with an internal protrusion 121. When the speaker module 2 is mounted on the carrier 1, the internal protrusion 121 is embedded in the opening portion 211b, as shown in Fig. 1. In this way, the thickness of a partial wall the carrier 1 is increased, which is beneficial to enhancing the structural strength of the housing 21 and the carrier 1. Further, the thickness of the internal protrusion 121 can be designed such that after the internal protrusion 121 is embedded in the opening portion 211b, the internal protrusion 121 acts as part of the inner wall that defines the second chamber b, and part of the inner wall formed by the internal protrusion 121 and defining the second chamber b is in smooth transition with the inner wall of the second sound port d.

Optionally, as shown in Fig. 4, the housing 21 is provided with an extension portion 211a, and the first sound port c is defined on the extension portion 211a. The extension portion 211a is inserted into the first opening 1a of the carrier 1, and an end surface of the extension portion 211a exposed by the first opening 1a is flush with an outer surface of the carrier 1. It is worth noting that it is necessary to ensure that the extension portion 211a is sealed with the inner wall define the first opening 1a. In this way, it is possible to prevent sound waves from being exposed from the gap between the first sound port c and the first opening 1a, which may affect the sound effect of the speaker module 2.

The housing 21 may also be provided with a second extension portion, the second sound port d is defined on the second extension portion, and the second extension portion is inserted into the second opening 1b of the carrier 1. An end surface of the second extension portion exposed by the second opening is flush with an outer surface of the carrier 1. It is worth noting that it is necessary to ensure that the second extension portion is sealed with the inner wall defining the second opening. In this way, it is possible to prevent sound waves from being exposed from the gap between the second sound port d and the second opening 1b, which may affect the sound effect of the speaker module 2.

The audio system 100 includes a circuit board, the circuit board is electrically connected to the speaker through an electrical connector 3, and some embodiments of the present disclosure provide different arrangements of the circuit board. Optionally, as shown in Fig. 2, a wiring channel e can be defined in the inner wall of the carrier 1, and the circuit board extends along the wiring channel e. After the housing 21 and the carrier 1 are assembled, the wiring channel e is insulated from the front chamber of the speaker and the rear chamber of the speaker. When the carrier 1 is a temple of smart glasses, the wiring channel e extends along a length direction of the temple, and one or both sides of the wiring channel e along a width direction are closed by the housing 21 or other structures. Optionally, as shown in Fig. 3, a wiring channel e may be defined between the outer wall of the housing 21 facing the back side of the opening portion 211b and the inner wall of the carrier 1, and the circuit board extends along the wiring channel e. In order to define a sufficient space between the housing 21 and the carrier 1 to accommodate the wiring channel e, a first recessed portion can be partially arranged on the outer wall surface of the housing 21 facing the carrier 1, and a second recessed portion can be partially arranged on the inner wall surface of the carrier 1 facing the housing 21. The first recessed portion and the second recessed portion are opposite in position, and the wiring channel e defined between the first recessed portion and the second recessed portion has a sufficient space to accommodate the circuit board.

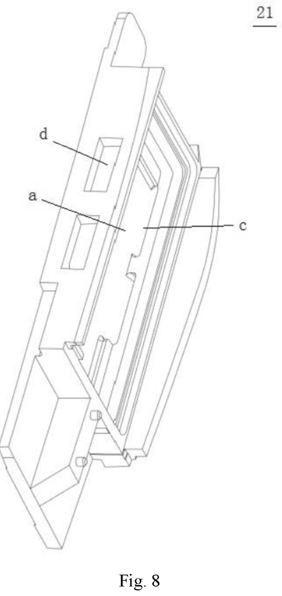

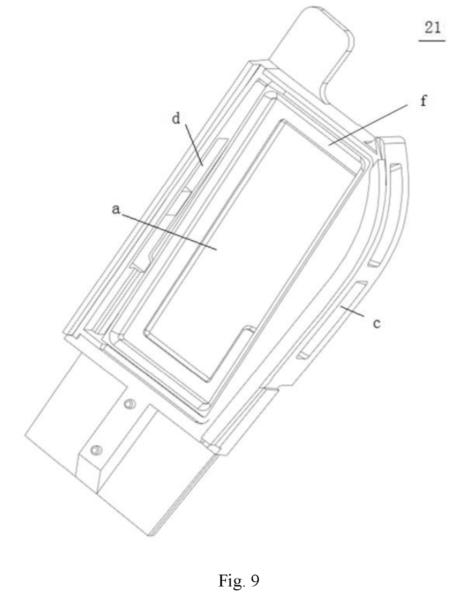

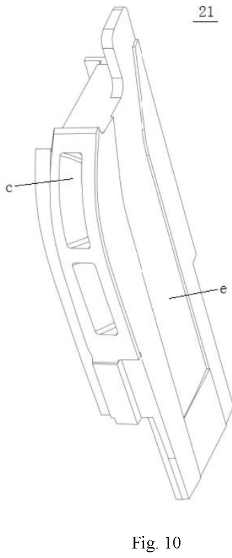

In an optional embodiment, the housing 21 of the speaker module 2 can be formed by splicing the first casing 211 and the second casing 212, as shown in Figs. 1 to 4. During mounting, the speaker unit 22 can be first mounted in either the first casing 211 or the second casing 212, and then the first casing 211 and the second casing 212 are assembled. The housing 21 of the speaker module 2 can also be an integral part, as shown in Fig. 5 and Figs. 8 to 10, the speaker unit 22 can be directly mounted into the housing 21 through the opening portion 211b on the housing 21.

As shown in Figs. 6 to 13, some embodiments of the present disclosure provide smart glasses, including: a frame 200 and an audio system 100, and the carrier 1 of the audio system 100 is connected to the frame 200. Optionally, the carrier 1 may be a temple. When the temple is worn on the head of the user, the distance between the sound outlet and the ear of the user is less than the distance between the air leakage port and the ear of the user.

The first sound wave generated by the front chamber of the speaker is emitted through the sound outlet, and the sound outlet is located close to the ear port. The second sound wave generated by the rear chamber of the speaker is emitted through the air leakage port, and the air leakage port faces in the direction away from the ear port. The second sound wave is out of phase with the first sound wave, e.g., the first sound wave is out of phase with the second sound wave by 180 degrees. In this way, the first sound wave can be heard by the user, and the second sound wave and the first sound wave will cancel out after being superimposed, such that people around the user of the smart glasses cannot hear the sound of the sound outlet, thereby protecting the privacy of the user of the smart glasses.

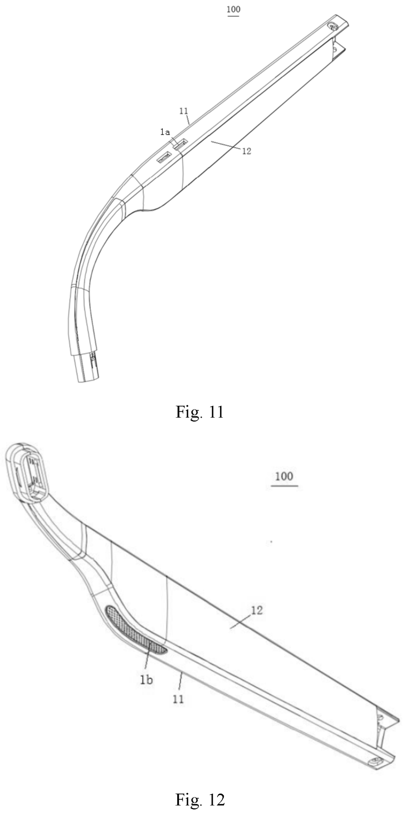

Optionally, as shown in Figs. 11 and 12, the temple is usually in a long strip shape, and the sound outlet (the second opening 1b) and the air leakage port (the first opening 1a) are separately arranged on end surfaces of both sides of the temple along the width direction. The temple is of a flat strip structure, and a sound outlet and an air leakage port are respectively defined on the end faces of both sides of the temple along the width direction, such that the distance between the sound outlet and the ear port of the user is different from the distance between the air leakage port and the ear port of the user.

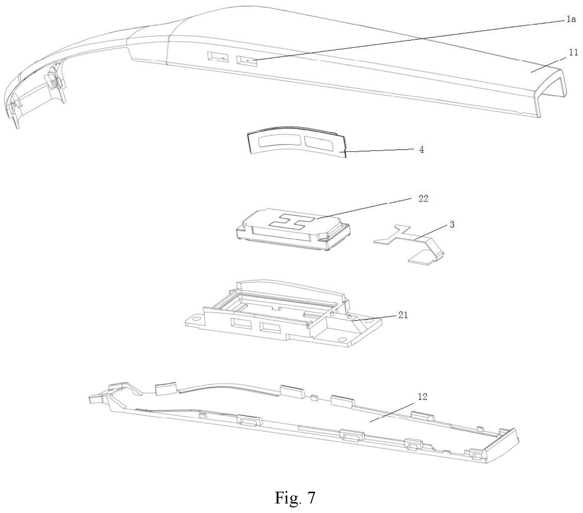

In some embodiments of the present disclosure, an internal structure of the temple of smart glasses is provided. As shown in Figs. 5 and 7, the smart glasses include an electrical connector 3, a dustproof mesh 5 and a mesh support member 4. The electrical connector 3 is configured to achieve electrical connection between the speaker unit 22 and the circuit board. The dustproof mesh 5 is arranged on the inner wall of the temple to cover the sound outlet on the temple. The mesh support member 4 is arranged between the dustproof mesh 5 and the housing 21 to support the dustproof mesh 5 and prevent the dustproof mesh 5 from vibrating. Optionally, a mesh support member 4 and a dustproof mesh can also be arranged on one side of the air leakage port.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1. A speaker module, comprising:
a housing provided with an opening portion; and
a speaker unit arranged inside the housing and exposed through the opening portion;
wherein, a first chamber of the speaker unit is defined inside the housing, the housing is provided with a first sound port, and the first chamber is in communication with outside through the first sound port.

2. The speaker module according to claim 1, wherein the speaker unit is arranged in any one of the following ways:
a sound-emitting side of the speaker unit is exposed through the opening portion; and
a side opposite to the sound-emitting side of the speaker unit is exposed through the opening portion.

3. The speaker module according to claim 1 or 2, wherein the housing is provided with a step for fixing the speaker unit.

4. The speaker module according to any one of claims 1 to 3, wherein the speaker module comprises an electrical connector, and the electrical connector is connected to the speaker unit through the opening portion.

5. An audio system, comprising:
a carrier provided with a hollow space, and a first opening and a second opening in communication with the hollow space; and
at least one speaker module as claimed in any one of claims 1 to 4;
wherein, the speaker module is arranged in the hollow space of the carrier, the speaker unit is exposed to the hollow space through the opening portion, and a second chamber of the speaker unit is defined in a partial area of the hollow space; and
wherein, the first opening is configured such that the first chamber is in communication with the outside through the first sound port, and the second opening is configured such that the second chamber is in communication with the outside.

6. The audio system according to claim 5, wherein the speaker unit is arranged in any one of the following ways:
a sound-emitting side of the speaker unit is concealed inside the housing, the first chamber is a front chamber of the speaker, the first opening is a sound outlet of the front chamber of the speaker, the second chamber is a rear chamber of the speaker, and the second opening is an air leakage port in communication with the rear chamber of the speaker; and
the sound-emitting side of the speaker unit is exposed to the hollow space through the opening portion, the first chamber is the rear chamber of the speaker, the first opening is the air leakage port of the rear chamber of the speaker, the second chamber is the front chamber of the speaker, and the second opening is the sound outlet of the front chamber of the speaker.

7. The audio system according to claim 5 or 6, wherein a volume of the first chamber is equal to a volume of the second chamber.

8. The audio system according to any one of claims 5 to 7, wherein the second chamber is in communication with the outside through any of the following communication methods:
a second sound port is defined in the housing, and the second opening is configured such that the second chamber is in communication with the outside through the second sound port; and
the carrier and the housing together define the second sound port, and the second opening is configured such that the second chamber is in communication with the outside through the second sound port.

9. The audio system according to claim 8, wherein a cross-sectional area of the first sound port is equal to a cross-sectional area of the second sound port.

10. The audio system according to claim 8, wherein the opening portion of the housing is in communication with the second sound port, and an inner wall of the carrier closes the opening portion to define the second chamber.

11. The audio system according to claim 10, wherein the carrier is provided with an internal protrusion; and
when the speaker module is mounted on the carrier, the internal protrusion is embedded into the opening portion.

12. The audio system according to any one of claims 5 to 11, wherein
the housing is provided with an extension portion, wherein the extension portion is provided with the first sound port, and the extension portion is inserted into the first opening.

13. The audio system according to any one of claims 5 to 12, comprising a circuit board electrically connected to the speaker, wherein the circuit board is arranged in any one of the following ways:
an inner wall of the carrier is provided with a wiring channel, and the circuit board extends along the wiring channel; and
the wiring channel is defined between the housing and the carrier, and the circuit board extends along the wiring channel.

14. Smart glasses, comprising:
a frame;
at least one audio system according to any one of claims 6 to 13, wherein the carrier of the audio system is connected to the frame;
wherein the carrier is a temple, and when the temple is worn on a head of a user, a distance between the sound outlet and an ear of the user is less than a distance between the air leakage port and the ear of the user.

15. The smart glasses according to claim 14, wherein the first opening and the second opening are separately arranged on end surfaces of two sides of the temple along a width direction.
